# FASCICULE DE BREVET EUROPEEN

(11) **EP 0 976 598 B1**
(45) Date de publication et mention de la délivrance du brevet: **08.01.2003**
(21) Numéro de dépôt: 99401932.1
(22) Date de dépôt: 28.07.1999
(51) Int. Cl.: B60K 15/04, F16K 15/14

(54) **Clapet anti-retour pour réservoir à carburant**
Rückschlagventil für Kraftstofftank
Check valve for fuel tank

(30) Priorité: 28.07.1998 FR 9809616
(43) Date de publication de la demande: 02.02.2000
(73) Titulaire: COMPAGNIE PLASTIC OMNIUM Société Anonyme dite:, 69007 Lyon (FR)
(72) Inventeur: Rosseel, Alexis, 60200 Compiegne (FR); Baudoux, Patrice, 02520 Flavy Le Martel (FR)
(74) Mandataire: Leszczynski, André

(56) Documents cités:
- EP-A- 0 796 602
- DE-A- 3 738 089
- US-A- 5 464 350

## Description

La présente invention concerne un clapet anti-retour de réservoir à carburant.

Un tel clapet est monté au bout de la tubulure qui sert au remplissage du réservoir, pour d'une part empêcher le carburant présent dans le réservoir d'être refoulé en cas de surpression dans ce dernier, et d'autre part, réduire le risque de fuite en cas d'accident ayant entraîné la rupture de la tubulure.

La présente invention a pour objet un nouveau clapet anti-retour qui soit fiable et de construction relativement peu coûteuse.

Le clapet anti-retour selon l'invention se caractérise par le fait qu'il comporte un organe d'obturation bi-stable.

En d'autres termes, l'organe d'obturation présente une position de fermeture stable et peut passer sous l'effet de la pression du carburant dans la tubulure de remplissage dans une position d'ouverture stable également.

De préférence, l'organe d'obturation présente en position de fermeture une configuration en parapluie et passe dans une configuration en parapluie inversé en position d'ouverture.

Le retour de l'organe d'obturation en position de fermeture peut avoir lieu par exemple sous l'effet d'une vague de carburant dans le réservoir.

Grâce à l'invention, le remplissage du réservoir peut s'effectuer avec un débit relativement élevé, du fait que le flux de carburant n'a pas en circulant à travers le clapet à s'opposer à une force de rappel élastique qui tendrait à ramener l'organe d'obturation vers sa position de fermeture.

L'invention sera mieux comprise à la lecture de la description détaillée qui va suivre, d'un exemple de réalisation non limitatif, et à l'examen du dessin annexé sur lequel :
- la figure 1 est une vue schématique en coupe axiale d'un clapet conforme à l'invention, et
- la figure 2 est une vue analogue à la figure 1, montrant l'organe d'obturation en position d'ouverture.

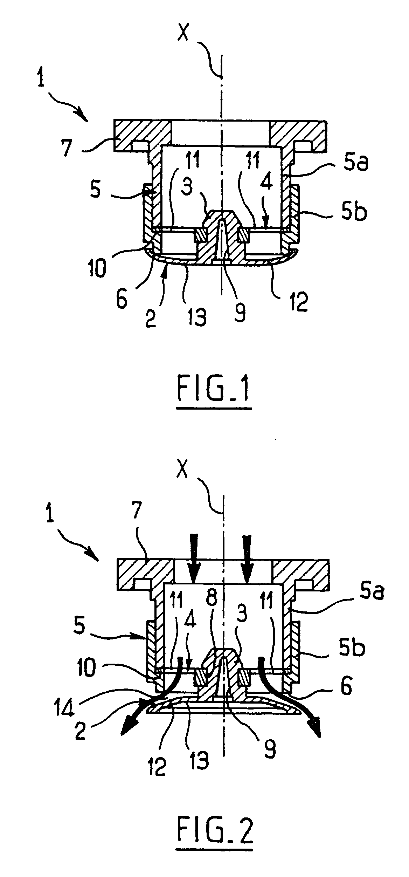

Le clapet 1 représenté sur les figures 1 et 2 comporte un organe d'obturation déformable 2 muni d'un plot central 3 de fixation sur un disque de maintien 4, lequel est assujetti à sa périphérie à un corps 5 ayant une forme générale cylindrique de révolution autour d'un axe de symétrie X.

Une extrémité axiale 6 de ce corps 5 sert de siège pour l'organe d'obturation 2 en position de fermeture et l'autre extrémité axiale 7 est munie d'une collerette permettant la fixation sur le réservoir.

Le plot 3 comporte une gorge annulaire 8 qui s'encliquette dans un perçage réalisé au centre du disque 4.

Pour favoriser la déformation radiale du plot 3 lors de son encliquetage, un trou borgne débouchant à l'opposé du disque 4 est réalisé à l'intérieur de celui-ci.

Le corps 5 est constitué dans l'exemple décrit par deux parties 5a, 5b coaxiales, emboîtées l'une dans l'autre.

La partie 5b, radialement la plus extérieure, présente un épaulement 10 contre lequel le disque 4 est maintenu en place par la partie 5a, radialement la plus intérieure.

Le disque 4 comporte des ajours 11 permettant au carburant de le traverser axialement lorsque l'organe d'obturation 2 est en position d'ouverture, comme représenté sur la figure 2.

L'organe d'obturation 2 comporte une membrane 12 réalisée d'un seul tenant avec le plot 3 par moulage d'une matière plastique élastomère.

Cette membrane 12 présente, au repos, une forme généralement concave vers l'intérieur du corps 5 et repose à sa périphérie contre l'extrémité 6 du corps 5 pour fermer de façon étanche le clapet.

Sous l'effet d'un flux de carburant entrant dans le corps 5 et provenant de la tubulure de remplissage, la membrane 12 peut, si la force exercée par le carburant est suffisante, se déformer en changeant de configuration et prendre la configuration en parapluie inversé représentée sur la figure 2.

Lors du passage de la configuration en parapluie à celle en parapluie inversé, la membrane 12 passe par un état intermédiaire dans lequel les contraintes internes sont maximums.

Dans la configuration en parapluie inversé, la face extérieure 13 de la membrane 12 est concave et cette dernière ménage avec l'extrémité 6 du corps 5 un intervalle annulaire 14 permettant au carburant de s'écouler librement.

Conformément à l'invention, la membrane 12 est relativement stable dans sa position d'ouverture, ce qui signifie qu'elle tend à conserver sa configuration en parapluie inversé même si la pression du carburant dans la tubulure de remplissage devient quasi-nulle. Ainsi, une fois l'organe d'obturation 2 ouvert, le carburant peut s'écouler librement au travers du clapet sans avoir à vaincre en permanence une force de rappel qui ramènerait l'organe d'obturation 2 vers sa position de fermeture.

Une fois le remplissage terminé, la membrane 12 peut reprendre sa configuration d'obturation représentée sur la figure 1 sous l'effet d'une vague de carburant refluant vers le clapet 1 par exemple.

Bien entendu, l'invention n'est pas limitée à l'exemple de réalisation qui vient d'être décrit, mais bien par les revendications jointes.

On peut notamment modifier la forme de l'organe d'obturation sans sortir du cadre de l'invention telle que revendiquée.

## Revendications

1. Clapet anti-retour de réservoir à carburant, **caractérisé par le fait qu'**il comporte un organe d'obturation (2) bi-stable.

2. Clapet selon la revendication 1, **caractérisé par le fait qu'**en position de fermeture, ledit organe d'obturation (2) présente une configuration en parapluie, et en position d'ouverture une configuration en parapluie inversé.

3. Clapet selon l'une des revendications 1 et 2, **caractérisé par le fait que** ledit organe d'obturation (2) est réalisé en une matière plastique élastomère.

4. Clapet selon l'une quelconque des revendications 1 à 3, **caractérisé par le fait que** l'organe d'obturation est fixé par un plot central sur un disque de maintien (4), lequel est assujetti à sa périphérie au corps (5) du clapet.

5. Clapet selon la revendication précédente, **caractérisé par le fait que** l'une (6) des extrémités axiales dudit corps (5) sert de siège à l'organe d'obturation (2) en position de fermeture.

6. Clapet selon la revendication précédente, **caractérisé par le fait que** l'autre extrémité axiale (7) dudit corps (5) sert au montage du clapet sur le réservoir.

7. Clapet selon l'une quelconque des deux revendications 5 ou 6, **caractérisé par le fait que** ledit corps (5) est constitué par l'assemblage de deux pièces (5a,5b) emmanchées l'une dans l'autre, le disque (4) de support de l'organe d'obturation (2) étant maintenu contre un épaulement (10) de l'une (5b) des pièces par l'autre (5a) pièce.

## Claims

1. Non-return check valve for a fuel tank, **characterized in that** it comprises a bistable shut-off member (2).

2. Check valve according to Claim 1, **characterized in that** in the closed position the said shut-off member (2) has an umbrella configuration, and in the open position it has the configuration of an inside-out umbrella.

3. Check valve according to either of Claims 1 and 2, **characterized in that** the said shut-off member (2) is made of an elastomeric plastic.

4. Check valve according to any one of Claims 1 to 3, **characterized in that** the shut-off member is fixed by a central stud to a holding disc (4) which is secured at its periphery to the body (5) of the check valve.

5. Check valve according to the preceding claim, **characterized in that** one (6) of the axial ends of the said body (5) serves as a seat for the shut-off member (2) in the closed position.

6. Check valve according to the preceding claim, **characterized in that** the other axial end (7) of the said body (5) serves to mount the check valve on the tank.

7. Check valve according to either one of the two Claims 5 and 6, **characterized in that** the said body (5) consists of the assembly of two parts (5a, 5b) fitted one inside the other, the disc (4) supporting the shut-off member (2) being held against a shoulder (10) of one (5b) of the parts by the other (5a) part.

## Patentansprüche

1. Rückschlagventil eines Kraftstofftanks, **dadurch gekennzeichnet, dass** es ein bistabiles Schließorgan (2) aufweist.

2. Ventil nach Anspruch 1, **dadurch gekennzeichnet, dass** in Schließposition das Schließorgan (2) in der Konfiguration eines Regenschirms vorliegt, und dass es in geöffneter Position eine Konfiguration in Form eines inversen Regenschirms hat.

3. Ventil nach einem der Ansprüche 1 und 2, **dadurch gekennzeichnet, dass** das Schließorgan (2) aus einem elastomeren Kunststoff hergestellt ist.

4. Ventil nach einem beliebigen der Ansprüche 1 bis 3, **dadurch gekennzeichnet, dass** das Schließorgan mittels eines zentralen Stiftes auf einer Tragscheibe (4) befestigt ist, welche an ihrem Rand mit dem Gehäuse (5) des Ventils verbunden ist.

5. Ventil nach einem der vorangegangenen Ansprüche, **dadurch gekennzeichnet, dass** einer (6) der axialen Endbereiche des Gehäuses (5) als Sitz des Schließorgans (2) in Schließposition dient.

6. Ventil nach einem der vorangegangenen Ansprüche, **dadurch gekennzeichnet, dass** der andere axiale Endbereich (7) des Gehäuses (5) der Montage des Ventils am Tank dient.

7. Ventil nach einem beliebigen der beiden Ansprüche 5 oder 6, **dadurch gekennzeichnet, dass** das Gehäuse (5) gebildet ist durch Zusammenfügen von zwei Teilstücken (5a, 5b), von denen das eine in das andere gesteckt ist, und dass die Tragscheibe (4) des Schließorgans (2) durch das andere Teilstück (5a) gegen eine Schulter (10) des einen Teilstücks (5b) gehalten ist.
